# FASCICULE DE BREVET EUROPEEN

(11) **EP 0 599 747 B1**
(45) Date de publication et mention de la délivrance du brevet: **08.10.1997**
(21) Numéro de dépôt: 93420460.3
(22) Date de dépôt: 22.11.1993
(51) Int. Cl.: A61C 11/00

(54) **Articulateur dentaire à rampes d'appui interchangeables**
Zahnärztlicher Artikulator mit austauschbaren Stützkeilen
Dental articulator with interchangeable resting wedges

(30) Priorité: 24.11.1992 FR 9214271
(43) Date de publication de la demande: 01.06.1994
(73) Titulaire: GERBELOT-BARRILLON, Pierre, F-74300 Cluses (FR)
(72) Inventeur: GERBELOT-BARRILLON, Pierre, F-74300 Cluses (FR)
(74) Mandataire: Poncet, Jean-François

(56) Documents cités:
- DE-A- 1 491 062
- US-A- 2 445 639
- US-A- 3 387 369
- US-A- 3 769 708
- US-A- 4 537 574
- US-E- R E31 615

## Description

La présente invention concerne les articulateurs pour l'art dentaire, utilisés pour la réalisation de travaux d'analyses occlusales et de prothèses dentaires.

Ces appareils permettent, en servant de support à des moulages de mâchoires inférieures et supérieures, de reproduire les mouvements mandibulaires.

On connaît notamment un tel articulateur décrit dans le document WO83/02223, comprenant un membre inférieur dont la partie antérieure forme une platine inférieure destinée à supporter un moulage de mâchoire inférieure et supporte un plateau incisif, et dont la partie postérieure comprend deux branches latérales supportant chacune une boule condylienne. Les boules condyliennes forment rotules sur lesquelles s'articule un membre supérieur comportant un moyeu postérieur muni de logements appropriés pour enfermer les boules condyliennes. Le membre supérieur comporte une platine supérieure destinée à supporter un moulage de mâchoire supérieure. La platine supérieure est solidaire du moyeu postérieur et sa partie antérieure reçoit une tige incisive venant en appui sur le plateau incisif. Les logements du moyeu postérieur sont limités par une rampe de guidage supérieure, par une rampe d'appui latérale, par une paroi postérieure servant de guidage aux mouvements transversaux du membre supérieur par rapport aux boules condyliennes, et par une butée antérieure mobile en translation selon un mouvement antéro-postérieur parallèle à la rampe de guidage supérieure et blocable en position quelconque.

Cet articulateur connu est réalisé en métal. La structure générale de cet articulateur n'est pas adaptée pour une réalisation en matériau plastique moulé.

Les rampes d'appui latérales, ou ailes de BENNETT, sont ouvertes vers l'avant d'un angle déterminé fixe reproduisant un angle de BENNETT moyen, qui est une donnée morphologique moyenne de la mâchoire.

L'inconvénient avec une telle structure est que l'angle de BENNETT est alors fixe, et ne correspond pas aux données morphologiques de toutes les mâchoires.

On a déjà proposé des articulateurs dans lesquels la rampe d'appui latérale, ou aile de BENNETT est une pièce métallique montée à pivotement sur le moyeu, et blocable de façon sélective en diverses positions orientées angulairement pour définir l'angle de BENNETT désiré par l'utilisateur. Une telle structure d'aile de BENNETT pivotante est toutefois relativement complexe, et onéreuse, car composée de pièces métalliques usinées.

On connaît également, dans le document US-A-3 769 708, un articulateur dont les rampes de guidage des boules condyliennes sont constituées par des pièces rapportées engagées par coulissement antéro-postérieur dans des glissières du moyeu postérieur. Une telle structure de fixation par coulissement dans des glissières s'avère inadaptée pour des pièces rapportées et des moyeux en matière plastique moulée, car elle requiert une grande précision et une grande propreté pour éviter à la fois les coincements et les jeux inacceptables.

Le problème proposé par la présente invention est de concevoir une nouvelle structure d'articulateur dans laquelle le moyeu postérieur de membre supérieur peut être réalisé par assemblage simple, fiable et précis de pièces moulées en matière plastique, tout en présentant une possibilité simple de variations d'orientation des rampes d'appui latérales ou ailes de BENNETT.

L'invention a ainsi pour avantage de simplifier la structure de l'articulateur tout en permettant un réglage d'inclinaison des rampes d'appui latérales, cette structure étant bien adaptée à une réalisation sous forme de pièces en matière plastique moulée, et assurant un assemblage simple, fiable et précis sans nécessiter une grande précision de dimensionnement des pièces.

Pour cela la structure d'articulateur selon, la présente invention reprend les principaux moyens du document US-A-3 769 708, formant le préambule de la revendication 1, mais en prévoyant un moyeu postérieur de membre supérieur conformé pour recevoir et maintenir des pièces interchangeables encliquetées sur une face de positionnement et d'encliquetage correspondante de moyeu et formant elles-mêmes lesdites rampes d'appui latérales ou ailes de BENNETT portant contre les boules condyliennes correspondantes, la face de positionnement et d'encliquetage de moyen formant la rampe de guidage supérieure de boule condylienne, de sorte que les pièces interchangables peuvent être placées sur le moyen postérieur par simple pression de bas en haut.

Chaque pièce interchangeable peut avantageusement comprendre plusieurs faces de positionnement venant au contact de faces réceptrices correspondantes du moyeu postérieur, les faces de positionnement et les faces réceptrices étant conformées pour interdire tout mouvement de la pièce interchangeable lorsqu'elle est encliquetée sur la face de positionnement et d'encliquetage correspondante du moyeu postérieur.

On peut ainsi avantageusement prévoir une série de pièces interchangeables présentant des faces de positionnement identiques et présentant des rampes d'appui décalées angulairement les unes par rapport aux autres, de sorte que, lorsques les pièces interchangeables sont encliquetées sur le moyeu postérieur, les rampes d'appui présentent chacune par rapport à l'axe antéro-postérieur de l'articulateur l'une des orientations d'une série prédéterminée d'angles de BENNETT.

D'autres objets, caractéristiques et avantages de la présente invention ressortiront de la description suivante de modes de réalisation particuliers, faite en relation avec les figures jointes, parmi lesquelles :

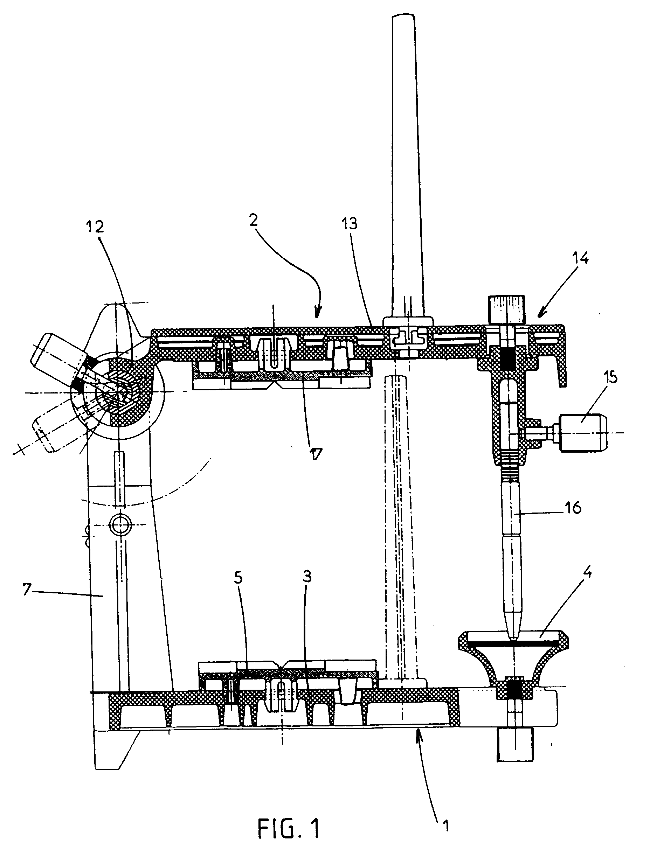

- la figure 1 est une vue de côté en coupe longitudinale d'un articulateur selon un mode de réalisation de la présente invention ;
- la figure 2 est une vue de dessus de l'articulateur de la figure 1 ;

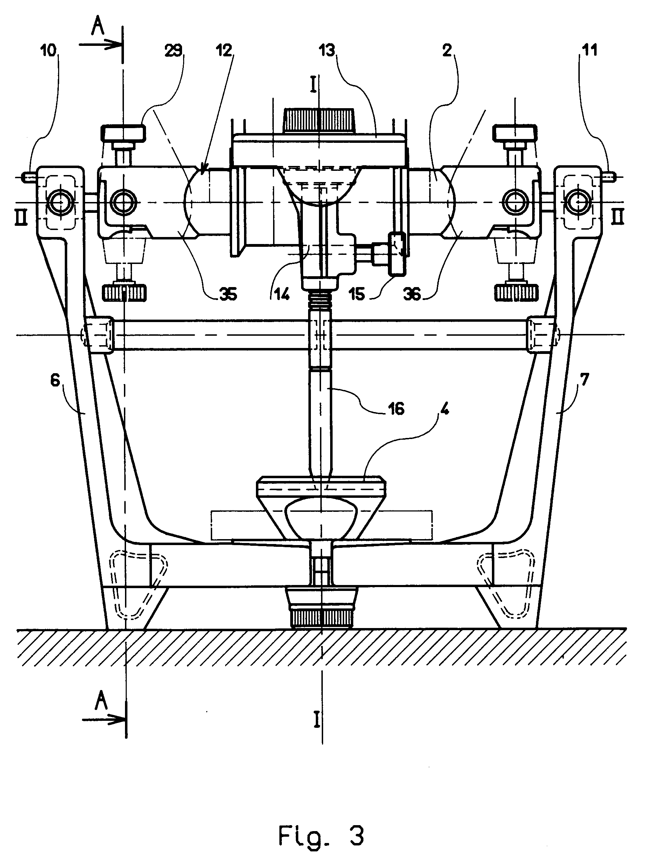

- la figure 3 est une vue de face de l'articulateur de la figure 1 ;
- la figure 4 est une vue de côté en coupe selon le plan A-A de la figure 3 ;
- la figure 5 est une vue de dessus d'une partie latérale de moyeu postérieur ;
- la figure 6 est une vue de face de la partie latérale de moyeu de la figure 5 ;
- la figure 7 est une vue de face en coupe transversale du moyeu de la figure 5 ;
- la figure 8 est une vue de dessous du moyeu de la figure 5 ;
- la figure 9 est une vue de côté en coupe selon le plan B-B de la figure 5 ;
- la figure 10 est une vue de côté en coupe selon le plan C-C de la figure 5 ;
- les figures 11 à 14 sont des vues de dessous d'une série de pièces interchangeables formant des ailes de BENNETT à angles de BENNETT différents ;
- la figure 15 est une vue en coupe selon le plan D-D de la figure 14 ;
- la figure 16 est une vue de dessus de la pièce interchangeable de la figure 14 ; et
- la figure 17 est une coupe selon le plan E-E de la figure 14.

Comme le représentent les figures, l'articulateur selon l'invention comprend de façon générale un membre inférieur 1 sur lequel s'articule un membre supérieur 2. Le membre inférieur 1 comprend une platine inférieure 3 dont la partie antérieure supporte un plateau incisif 4. La partie centrale de la platine inférieure 3 permet l'adaptation d'une plaque de montage inférieure 5. La partie postérieure de la platine inférieure 3 se raccorde à deux branches latérales verticales 6 et 7 dont les zones supérieures portent chacune une boule condylienne, respectivement 8 et 9.

Les boules condyliennes 8 et 9 sont disposées en regard l'une de l'autre et font saillie des faces intérieures des branches verticales 6 et 7 en bout de tiges de maintien.

Sur la partie extérieure des branches verticales 6 et 7 sont fixés deux axes de pivotement 10 et 11 qui correspondent à l'axe auriculaire et permettent l'adaptation d'un arc facial.

Le membre supérieur 2 est embrochable sur les boules condyliennes 8 et 9, et comporte pour cela un moyeu 12 solidaire d'une platine supérieure 13. La partie antérieure de la platine supérieure 13 comprend un dispositif de guidage et de blocage 14 comportant un canon d'axe vertical et une vis de blocage 15 transversale. Une tige incisive 16 peut être introduite et bloquée dans le canon pour venir en appui sur le plateau incisif 4 et maintenir en position de travail le membre supérieur 2, position dans laquelle la platine supérieure 13 est généralement parallèle à la platine inférieure 3.

La partie centrale de la platine supérieure 13 comporte un dispositif de positionnement sur lequel s'adapte une plaque de montage supérieure 17.

Les plaques de montage inférieure 5 et supérieure 17 sont destinées à supporter des moulages de mâchoire inférieure et supérieure respectivement.

Le moyeu 12 comporte, au voisinage de chacune de ses extrémités, des logements appropriés pour enfermer les boules condyliennes 8 et 9. Les deux logements du moyeu ont une disposition symétrique par rapport au plan antéro-postérieur médian I-I du dispositif. Il est donc suffisant de décrire l'un des deux logements, par exemple le logement relatif à la première boule condylienne 8.

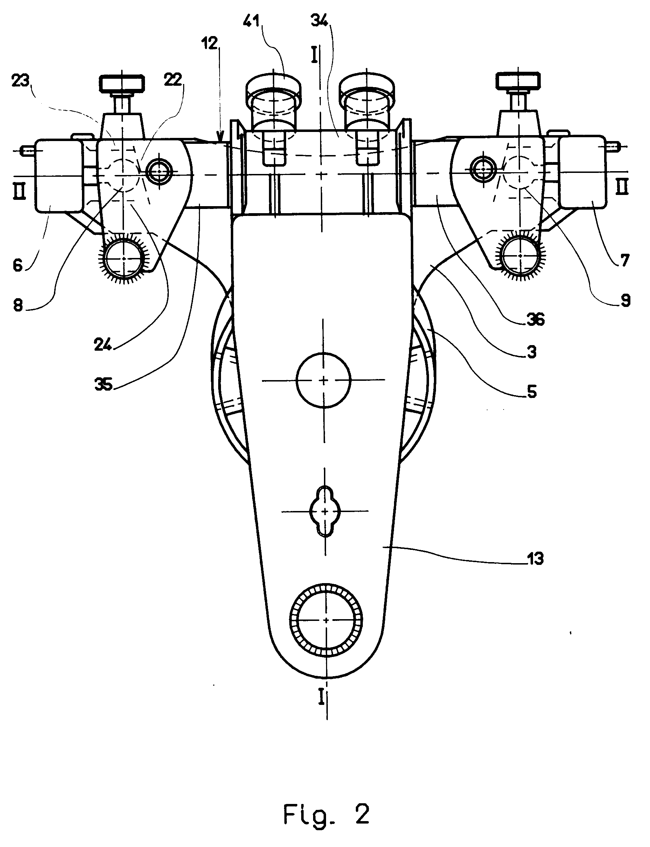

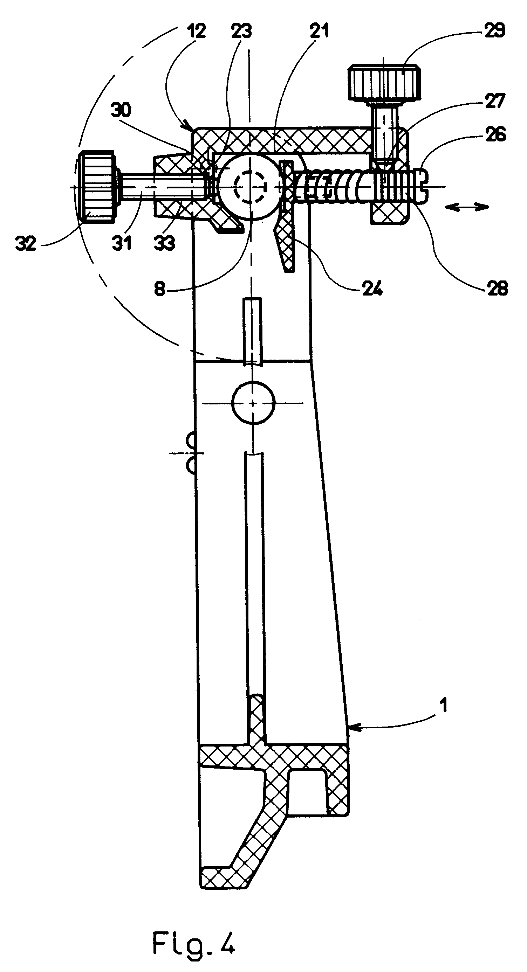

Comme le représentent les figures 2 et 4, le logement de la boule condylienne 8 est limité par une rampe de guidage supérieure 21, avantageusement inclinée vers l'avant d'un angle reproduisant la pente condylienne qui est une donnée morphologique habituelle de la mâchoire. Le logement est également limité par une rampe d'appui latérale 22, ou aile de BENNETT, qui est simplement représentée en pointillés sur la figure 2. L'aile de BENNETT est perpendiculaire à la rampe de guidage supérieure 21, et ouverte vers l'avant d'un angle reproduisant un angle BENNETT, qui est une autre donnée morphologique de la mâchoire. Le logement est en outre limité par une paroi postérieure 23 profilée de façon à permettre les mouvements transversaux du membre supérieur 2 par rapport aux boules condyliennes 8 et 9. Enfin, le logement peut éventuellement être limité vers l'avant par une butée antérieure 24, mobile en translation selon un mouvement antéro-postérieur parallèle à la rampe de guidage supérieure 21 et perpendiculaire à l'axe II-II transversal de l'articulateur, ou axe du moyeu 12.

La butée antérieure 24, sollicitée par un ressort, est solidaire d'une tige de guidage 26 montée à coulissement dans un alésage d'un épaulement 27 antérieur du moyeu 12.

La tige de guidage 26 est munie, au voisinage de son extrémité libre dépassant à l'extérieur de l'épaulement 27, de repères annulaires 28 permettant d'en mesurer le déplacement.

Une vis de blocage transversale 29 permet de bloquer la tige 26 en une position quelconque, assurant le blocage sélectif de la butée antérieure 24.

Le logement comporte en outre une butée postérieure 30 comprenant une tige de guidage 31 dont une première extrémité est munie d'un bouton de manoeuvre 32 et dont l'autre extrémité vient en appui contre la boule condylienne 8. La tige 31 est partiellement filetée pour coopérer avec un taraudage correspondant de l'alésage 33 du moyeu dans lequel elle est insérée. Par vissage au moyen du bouton 32, la butée postérieure 30 se déplace ainsi selon un mouvement antéro-postérieur parallèle à la rampe de guidage supérieure 21 entre une première position dans laquelle elle libère totalement la boule condylienne 8, comme le représente la figure 4, et une seconde position dans laquelle elle repousse la boule condylienne 8 à l'encontre de la butée antérieure 24 et du ressort associé en direction de l'épaulement 27.

Dans le mode de réalisation représenté, le moyeu postérieur 12 comprend une portion centrale 34 de moyeu solidaire de la platine supérieure 13, et deux parties latérales 35 et 36 de moyeu montées à pivotement axial de part et d'autre de la portion centrale 34 de moyeu. Les parties latérales 35 et 36 peuvent ainsi pivoter selon l'axe transversal II-II de l'articulateur, et des moyens permettent de les bloquer sélectivement en toute position angulaire choisie sur la portion centrale 34. L'orientation choisie des parties latérales 35 et 36 fixe ainsi la pente condylienne ou inclinaison de la rampe de guidage supérieure 21.

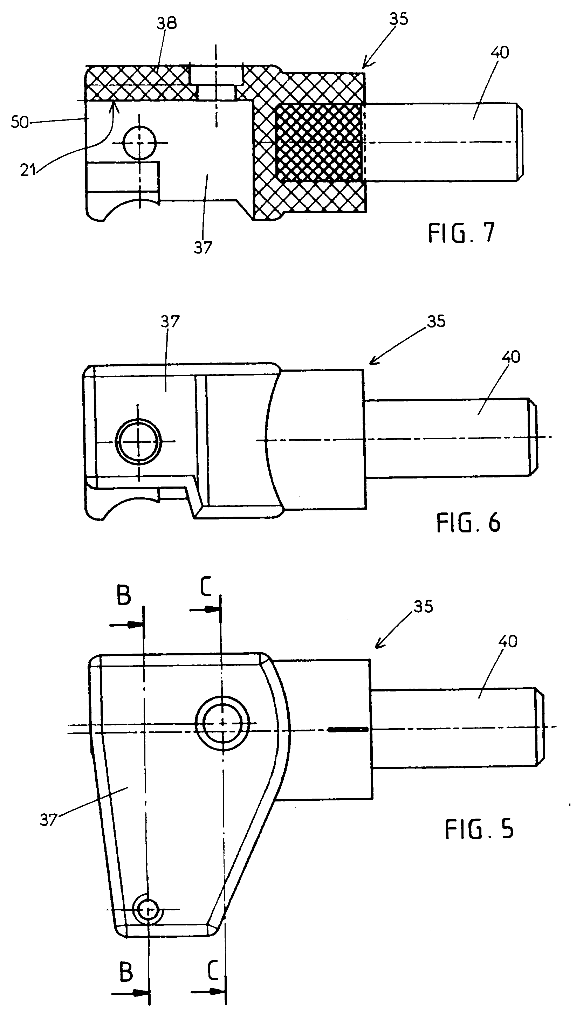

Les parties latérales 35 et 36 de moyeu sont symétriques l'une de l'autre. On a par exemple représenté sur les figures 5 à 10 la structure de la partie latérale 35 de moyeu. Cette partie latérale 35 comprend un corps creux 37, ouvert vers le bas, limité par une paroi supérieure 38 formant la rampe de guidage supérieure 21, par une paroi postérieure 23, et par une paroi périphérique 39. Le corps creux 37, réalisé en matière plastique moulée, se prolonge par un arbre de rotation 40 qui vient s'engager dans un alésage correspondant de la portion centrale 34 de moyeu, dans laquelle il est bloqué par une vis 41. La vis 41 et l'arbre 40 constituent les moyens de blocage en position angulaire de la partie latérale correspondante 35.

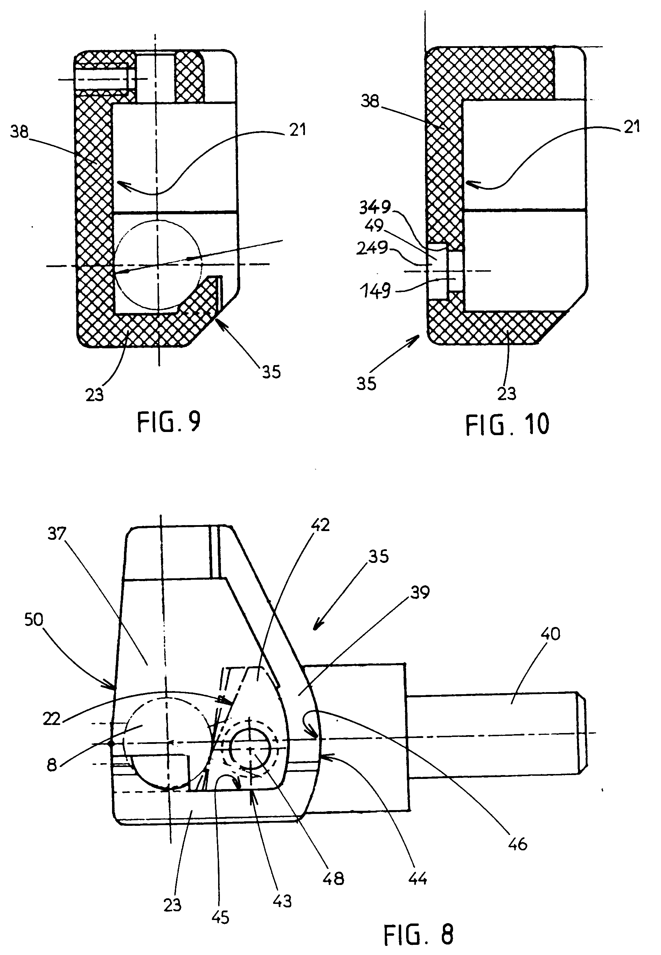

Selon l'invention, le moyeu postérieur 12 est conformé pour recevoir et maintenir des pièces interchangeables encliquetées dont une face d'appui forme une rampe d'appui latérale 22 portant contre la boule condylienne correspondante. Ainsi, comme le représente la figure 8, la partie latérale 35 de moyeu reçoit, dans la cavité de son corps creux 37, une pièce interchangeable 42 formant la rampe d'appui latérale 22.

Les pièces interchangeables telles que la pièce 42 sont encliquetés sur une face de positionnement et d'encliquetage correspondante de moyeu. La face de positionnement et d'encliquetage de moyeu est avantageusement formée par la face intérieure de paroi supérieure 38 de partie latérale 35 de moyeu, qui forme elle-même la rampe de guidage supérieure 21.

Dans le mode de réalisation représenté, la pièce interchangeable 42 comprend plusieurs faces de positionnement 43 et 44 qui viennent au contact de faces réceptrices 45 et 46 correspondantes du corps creux de moyeu postérieur 12, les faces de positionnement 43 et 44 et les faces réceptrices 45 et 46 correspondantes étant conformées pour interdire tout mouvement de rotation de la pièce interchangeable 42 lorsqu'elle est en position sur le moyeu postérieur 12.

Selon une réalisation préférée, telle que représentée sur les figures, la pièce interchangeable 42 présente une surface périphérique cylindrique et deux surfaces d'extrémité, une première portion de surface périphérique cylindrique formant ladite rampe d'appui 22 venant porter contre la boule condylienne correspondante 8, d'autres portions de surface périphérique cylindrique formant des faces de positionnement latérales 43 et 44 en appui sur les faces réceptrices correspondantes 45 et 46 du moyeu postérieur 12. Une première surface d'extrémité 47 forme une face de positionnement et d'encliquetage de pièce interchangeable, adaptée pour se fixer par encliquetage sur la face de positionnement et d'encliquetage correspondante 21 de moyeu postérieur 12. La face de positionnement et d'encliquetage 47 de pièce interchangeable comprend pour cela un ergot d'encliquetage 48 conformé pour s'engager et s'encliqueter élastiquement dans un trou correspondant 49 ménagé dans la face de positionnement et d'encliquetage correspondante 21 du moyeu postérieur 12.

Selon cette disposition, la pièce interchangeable 42 peut être placée dans le logement intérieur du corps creux 37 de moyeu 12 par simple pression de bas en haut, en engageant l'ergot d'encliquetage 48 dans le trou correspondant 49, et en orientant la pièce interchangeable 42 pour faire porter les faces de positionnement 43 et 44 sur les faces correspondantes 45 et 46. Lorsqu'elle est encliquetée dans son logement, la pièce interchangeable 42 est solidaire du moyeu 12, et sa rampe 22 présente par rapport à l'axe antéro-postérieur I-I de l'articulateur un angle A égal à la valeur choisie pour l'angle de BENNETT.

Dans le mode de réalisation représenté sur les figures 10, 15 et 16, qui convient particulièrement bien pour assurer un encliquetage précis, fiable et simple des pièces interchangeables, tout en facilitant les opérations de moulage de matière plastique, le trou 49 est formé de la succession de deux alésages, à savoir un alésage intérieur 149 de diamètre réduit, et un alésage extérieur 249 de diamètre supérieur, disposés coaxialement l'un par rapport à l'autre et raccordés l'un à l'autre par un épaulement 349. Chacun des deux alésages occupe sensiblement la moitié de l'épaisseur de la paroi 38.

Pour s'adapter dans ce trou 49, l'ergot 48 présente une forme tubulaire creuse à section transversale généralement circulaire, dont la paroi périphérique est formée de trois languettes longitudinales respectivement 148,248 et 348 séparées les unes des autres par des fentes longitudinales telles que la fente 548. Les languettes longitudinales formant la paroi périphérique entourent un creux intérieur 448. La surface extérieure de l'ergot 48 présente un profil longitudinal en dent de scie dont le sommet 648 occupe une position intermédiaire telle que, lorsque la pièce interchangeable 42 est en position d'encliquetage, avec sa face de positionnement et d'encliquetage 47 en appui contre la face de positionnement et d'encliquetage 21 correspondante du moyeu postérieur 12, le sommet 648 vient se loger dans l'alésage extérieur 249 derrière l'épaulement 349 du trou 49. Les fentes 548 donnent à l'ergot une élasticité autorisant l'engagement en force de l'ergot 48 dans le trou 49, et également son dégagement en force par simple traction axiale.

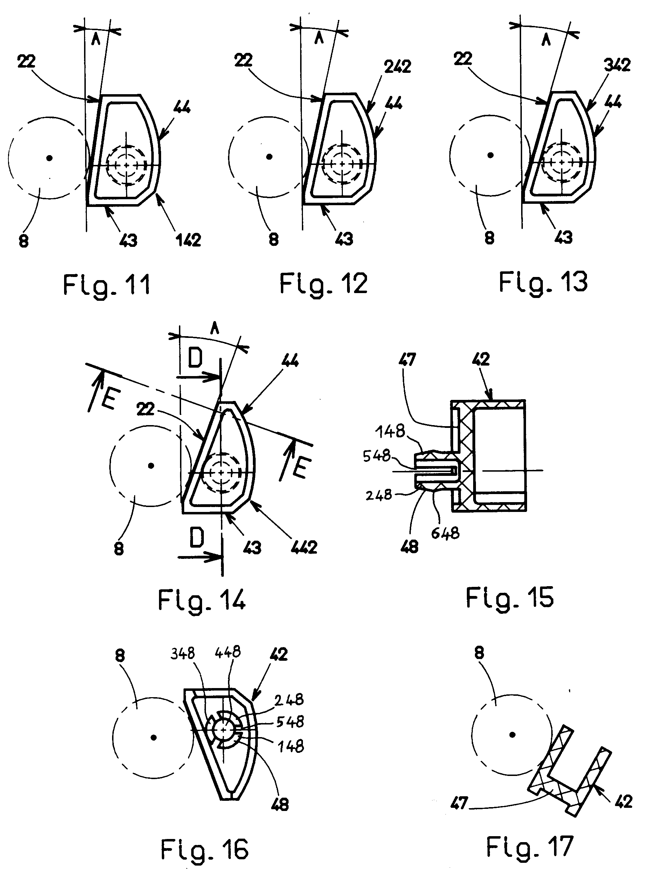

Selon l'invention, on prévoit avantageusement une série de pièces interchangeables telles que les pièces 42, 142, 242, 342 et 442 représentées sur les figures 11 à 14, présentant des faces de positionnement 43 et 44 identiques, et présentant des rampes d'appui 22 décalées angulairement les unes par rapport aux autres, de sorte que, lorsque les pièces interchangeables 42, 142, 242, 342, 442 sont encliquetées sur le moyeu postérieur 12, les rampes d'appui 22 présentent chacune par rapport à l'axe antéro-postérieur de l'articulateur l'une des orientations d'une série prédéterminée d'angles de BENNETT.

Par exemple, la pièce 142 peut présenter un angle A égal à 10 degrés environ, la pièce 242 présentant un angle A égal à 15 degrés environ, la pièce 342 présentant un angle A égal à 20 degrés environ, et la pièce 442 présentant un angle A égal à 25 degrés environ.

Le corps creux 37 est ainsi limité par une paroi périphérique 39 formant les faces réceptrices 45 et 46 et comportant une ouverture 50 pour le passage de la tige de maintien de boule condylienne 8.

Les pièces interchangeables telles que la pièce 42 peuvent être réalisées en matière plastique moulée. Il en est de même de la plupart des parties de l'articulateur selon l'invention. Le réglage de l'angle de BENNETT s'effectue en choisissant simplement la pièce interchangeable correspondant le mieux à l'angle recherché.

La présente invention n'est pas limitée aux modes de réalisation qui ont été explicitement décrits, mais elle en inclut les diverses variantes et généralisations contenues dans le domaine des revendications ci-après.

## Revendications

1. Appareil articulateur pour l'art dentaire, notamment pour la réalisation de travaux d'analyses occlusales et de prothèse dentaire, comprenant un membre inférieur (1) dont la partie antérieure forme une platine inférieure (3) destinée à supporter un moulage de mâchoire inférieure et supporte un plateau incisif (4), et dont la partie postérieure comprend deux branches latérales (6, 7) supportant chacune une boule condylienne (8, 9), lesdites boules condyliennes formant rotules sur lesquelles s'articule un membre supérieur (2) comportant un moyeu postérieur (12) muni de logements appropriés pour enfermer les boules condyliennes (8, 9), le membre supérieur (2) comportant une platine supérieure (13) destinée à supporter un moulage de mâchoire supérieure, la platine supérieure (13) étant solidaire du moyeu postérieur (12) et sa partie antérieure recevant une tige incisive (16) venant en appui sur le plateau incisif (4), les logements du moyeu postérieur (12) étant limités au moins par une rampe de guidage supérieure (21), par une rampe d'appui latérale (22), et par une paroi postérieure (23) servant de guidage aux mouvements transversaux du membre supérieur (2) par rapport aux boules condyliennes (8, 9), le moyeu postérieur (12) étant conformé pour recevoir et maintenir des pièces interchangeables (42, 142, 242, 342, 442) dont une face d'appui forme ladite rampe d'appui latérale (22) portant contre la boule condylienne correspondante (8), caractérisé en ce que les pièces interchangeables (42, 142, 242, 342, 442) sont encliquetées sur une face de positionnement et d' encliquetage correspondante (21) de moyeu formant la rampe de guidage supérieure (21) de boule condylienne (8, 9), de sorte que les pièces interchangeables (42, 142, 242, 342, 442) peuvent être placées sur le moyeu postérieur (12) par simple pression de bas en haut.

2. Articulateur selon la revendication 1, caractérisé en ce que la pièce interchangeable (42) comprend plusieurs faces de positionnement (43, 44) venant au contact de faces réceptrices (45, 46) correspondantes du moyeu postérieur (12), lesdites faces de positionnement (43, 44) et réceptrices (45, 46) étant conformées pour interdire tout mouvement de ladite pièce interchangeable (42) lorsqu'elle est encliquetée sur la face de positionnement et d'encliquetage correspondante (21) du moyeu postérieur (12).

3. Articulateur selon la revendication 2, caractérisé en ce que la pièce interchangeable (42) présente une surface périphérique cylindrique et deux surfaces d'extrémité, une première portion de surface périphérique cylindrique formant ladite face d'appui (22) venant porter contre la boule condylienne (8) correspondante, d'autres portions de surface périphérique cylindrique formant des faces de positionnement (43, 44) latérales en appui sur les faces réceptrices correspondantes (45, 46) du moyeu postérieur (12), une première surface d'extrémité (47) formant une face de positionnement et d'encliquetage de pièce interchangeable qui est adaptée pour se fixer par encliquetage sur la face de positionnement et d'encliquetage correspondante (21) du moyeu postérieur (12).

4. Articulateur selon la revendication 3, caractérisé en ce que les faces de positionnement latérales (43, 44) sont agencées pour interdire toute rotation de la pièce interchangeable (42).

5. Articulateur selon l'une des revendications 3 ou 4, caractérisé en ce que la face de positionnement et d'encliquetage (47) de pièce interchangeable comprend un ergot d' encliquetage (48) conformé pour s'engager et s'encliqueter élastiquement dans un trou correspondant (49) ménagé dans le moyeu postérieur (12) sur sa face de positionnement et d'encliquetage correspondante (21).

6. Articulateur selon l'une quelconque des revendications 1 à 5, caractérisé en ce qu'il comprend une série de pièces interchangeables (42, 142, 242, 342, 442) présentant des faces de positionnement identiques (43, 44) et présentant des rampes d'appui (22) décalées angulairement les unes par rapport aux autres, de sorte que, lorsque les pièces interchangeables sont encliquetées sur le moyeu postérieur (12), les rampes d'appui (22) présentent chacune par rapport à l'axe antéro-postérieur (I-I) de l'articulateur l'une des orientations d'une série prédéterminée d'angles de BENNETT (A).

7. Articulateur selon l'une quelconque des revendications 1 à 6, caractérisé en ce que le moyeu postérieur (12) comprend :
- une portion centrale (34) de moyeu, solidaire de la platine supérieure (13),
- deux parties latérales (35, 36) de moyeu, montées à pivotement axial de part et d'autre de la portion centrale (34),
- des moyens (40, 41) pour bloquer sélectivement lesdites parties latérales (35, 36) en toute position angulaire choisie sur la portion centrale (34), fixant ainsi la pente condylienne.

8. Articulateur selon la revendication 7, caractérisé en ce que chaque partie latérale (35, 36) de moyeu comprend un corps creux (37), ouvert vers le bas, limité par une paroi supérieure (38) formant la rampe de guidage supérieure (21), par une paroi postérieure (23), et par une paroi périphérique (39), ladite paroi périphérique (39) formant les faces réceptrices (45, 46) et comprenant une ouverture (50) pour le passage de la tige de maintien de boule condylienne (8).

## Claims

1. Dental articulator device, in particular for occlusion analysis and dental prosthesis work, comprising a lower member (1) the anterior part of which forms a lower plate (3) adapted to support a lower jaw cast and supports an incisal plate (4) and the posterior part of which has two lateral branches (6, 7) each supporting a condyle ball (8, 9), said condyle balls forming ball joints on which is articulated an upper member (2) including a posterior hub (12) provided with appropriate housings to enclose the condyle balls (8, 9), the upper member (2) including an upper plate (13) adapted to support an upper jaw cast, the upper plate (13) being attached to the posterior hub (12) and its anterior part receiving an incisal rod (16) bearing on the incisal plate (4), the housings of the posterior hub (12) being delimited at least by an upper guide ramp (21), by a lateral bearing ramp (22) and by a posterior wall (23) guiding transverse movements of the upper member (2) relative to the condyle balls (8, 9), the posterior hub (12) being shaped to receive and to hold interchangeable parts (42, 142, 242, 342, 442) a bearing face of which forms said lateral bearing ramp (22) bearing against the corresponding condyle ball (8), characterised in that the interchangeable parts (42, 142, 242, 342, 442) are clipped onto a corresponding locating and clipping face (21) of the hub forming tee upper guide ramp (21) for the condyle ball (8, 9) so that the interchangeable parts (42, 142, 242, 342, 442) can be fitted to the posterior hub (12) by simply pressing them upwards.

2. Articulator according to claim 1 characterised in that the interchangeable part (42) has a plurality of locating faces (43, 44) coming into contact with corresponding receiving faces (45, 46) of the posterior hub (12), said locating faces (43, 44) and receiving faces (45, 46) being shaped to prevent any movement of said interchangeable part (42) when it is clipped onto the corresponding locating and clipping face (21) of the posterior hub (12).

3. Articulator according to claim 2 characterised in that the interchangeable part (42) has a cylindrical peripheral surface and two end surfaces, a first cylindrical peripheral surface portion forming said bearing face (22) bearing against the corresponding condyle ball (8), other cylindrical peripheral surface portions forming lateral locating faces (43, 44) bearing on the corresponding receiving faces (45, 46) of the posterior hub (12), a first end surface (47) forming an interchangeable part locating and clipping face which is adapted to be clipped to the corresponding locating and clipping face (21) of the posterior hub (12).

4. Articulator according to claim 3 characterised in that lateral locating faces (43, 44) are adapted to prevent any rotation of the interchangeable part (42).

5. Articulator according to claim 3 or claim 4 characterised in that the interchangeable part locating and clipping face (47) includes a clipping lug (48) shaped to engage and clip resiliently in the corresponding hole (49) in the posterior hub (12) on its corresponding locating and clipping face (21).

6. Articulator according to any one of claims 1 to 5 characterised in that it includes a series of interchangeable parts (42, 142, 242, 342, 442) having identical locating faces (43, 44) and angularly offset bearing ramps (22) so that when the interchangeable parts are clipped onto the posterior hub (12) the bearing ramps (22) each have relative to the anterior-posterior axis (I-I) of the articulator one of a series of predetermined BENNETT angle (A) orientations.

7. Articulator according to any one of claims 1 to 6 characterised in that the posterior hub (12) includes:
- a central hub portion (34) attached to the upper plate (13),
- two lateral hub parts (35, 36) pivoting axially on respective opposite sides of the central portion (34),
- means (40, 41) for selectively locking said lateral parts (35, 36) in any chosen angular position on the central portion (34), so fixing the condylar slope.

8. Articulator according to claim 7 characterised in that each lateral hub part (35, 36) includes a hollow body (37) open at the bottom delimited by an upper wall (38) forming the upper guide ramp (21), a posterior wall (23) and a peripheral wall (39), said peripheral wall (39) forming the receiving faces (45, 46) and including an opening (50) through which passes the rod for retaining the condyle ball (8).

## Patentansprüche

1. Artikulator für die Zahntechnik, insbesondere zur Ausführung von Okklusionsanalysen und der Anfertigung von Zahnprothesen, umfassend ein Unterteil (1), dessen vorderer Teil einen unteren Tisch (3) zur Aufnahme eines Unterkiefermodells bildet und einen Inzisaltisch (4) trägt und dessen hinterer Teil seitliche Säulen (6, 7) aufweist, von denen jede eine Kondylarkugel (8, 9) abstützt, welche Kugelgelenke bilden, an denen ein Oberteil (2) angelenkt ist, das eine hintere Nabe (12) hat, die mit Sitzen zum Einschließen der Kondylarkugeln (8, 9) ausgerüstet ist, wobei das Oberteil (2) einen oberen Tisch (13) zur Halterung eines Oberkiefermodells hat, welcher fest mit der hinteren Nabe (12) verbunden ist und dessen vorderer Teil einen Inzisalstift (16) aufnimmt, der sich an einem Inzisaltisch (4) abstützt, wobei die Sitze der hinteren Nabe (12) durch wenigstens eine obere Führungsrampe (21), eine seitliche Führungsrampe (22) und eine hintere Führungsrampe (23) begrenzt sind, die als Führungen für die Querbewegungen des Oberteils (2) relativ zu den Kondylarkugeln (8, 9) dienen, und wobei die hintere Nabe (12) so ausgebildet ist, daß sie auswechselbare Teile (42, 142, 242, 342, 442) aufnehmen und halten kann, von denen eine Abstützfläche die seitliche Führungsrampe (22) bildet, an der sich die entsprechende Kondylarkugel (8) abstützt, dadurch gekennzeichnet, daß die auswechselbaren Teile (42, 142, 242, 342, 442) in eine entsprechende Positionier- und Sperrwange (21) der Nabe eingerastet sind, welche die obere Führungsrampe (21) für die Kondylarkugel (8, 9) bildet, derart, daß die auswechselbaren Teile (42, 142, 242, 342, 442) durch einfachen Druck von unten nach oben an der hinteren Nabe (12) festgelegt werden können.

2. Artikulator nach Anspruch 1, dadurch gekennzeichnet, daß das auswechselbare Teil (42) mehrere Positionierflächen (43, 44) hat, die in Berührung mit den entsprechenden Gegenflächen (45, 46) der hinteren Nabe (12) kommen, wobei die Positionierflächen (43, 44) und die Gegenflächen (45, 46) so ausgebildet sind, daß sie jede Bewegung des auswechselbaren Teils (42) verhindern, wenn dieses in der entsprechenden Positionier- und Sperrwange (21) der hinteren Nabe (12) eingerastet ist.

3. Artikulator nach Anspruch 2, dadurch gekennzeichnet, daß das auswechselbare Teil (42) eine zylindrische Umfangsfläche und zwei Endflächen hat, wobei ein erster Abschnitt der zylindrischen Umfangsfläche die seitliche Führungsrampe (22) bildet, an der sich die entsprechende Kondylarkugel (8) abstützt, und weitere Abschnitte der zylindrischen Umfangsfläche die seitlichen Positionierflächen (43, 44) bilden, die an den entsprechenden Gegenflächen (45, 46) der hinteren Nabe (12) anliegen, und wobei eine erste Endfläche (47) eine Positionier- und Sperrwange des auswechselbaren Teiles bildet, die mit der entsprechenden Positionier- und Sperrwange (21) der hinteren Nabe (12) verrastbar ist.

4. Artikulator nach Anspruch 3, dadurch gekennzeichnet, daß die seitlichen Positionierflächen (43, 44) so ausgebildet sind, daß sie jede Drehbewegung des auswechselbaren Teiles (42) verhindern.

5. Artikulator nach Anspruch 3 oder 4, dadurch gekennzeichnet, daß die Positionier- und Sperrwange (47) des auswechselbaren Teiles einen Rastvorsprung (48) aufweist, der so ausgebildet ist, daß er elastisch in eine entsprechende Öffnung (49) einsetzbar und einrastbar ist, welche in die Positionier- und Sperrwange (21) der hinteren Nabe (12) eingearbeitet ist.

6. Artikulator nach einem der Ansprüche 1 bis 5, dadurch gekennzeichnet, daß dieser eine Serie auswechselbarer Teile (42, 142, 242, 342, 442) aufweist, welche untereinander identische Positionierflächen (43, 44) haben und Führungsrampen (22) aufweisen, die zueinander winkelmäßig abgestuft sind derart, daß bei in die hintere Nabe (12) eingesetzten, auswelchselbaren Teilen die Führungsrampen (22) zur von vorn nach hinten durchlaufenden Längsachse (I-I) des Artikulators jeweils eine Neigung einer vorbestimmten Reihe von Bennet-Winkeln (A) einnehmen.

7. Artikulator nach einem der Ansprüche 1 bis 6, dadurch gekennzeichnet, daß die hintere Nahe (12) umfaßt:
- einen mittleren Nabenabschnitt (34), der fest mit dem oberen Tisch (13) verbunden ist,
- zwei seitliche Nabenabschnitte (35, 36), die in beide Seiten des mittleren Nabenabschnittes (34) axial schwenkbar eingesetzt sind,
- Mittel (40, 41) zur wahlweisen Fixierung der seitlichen Nahenabschnitte (35, 36) in jeder gewählten Winkelstellung auf dem mittleren Nabenabschnitt (34), um dadurch die Kondylenneigung einzustellen.

8. Artikulator nach Anspruch 7, dadurch gekennzeichnet, daß jeder seitliche Nabenabschnitt (35, 36) der Nabe einen nach unten offenen Hohlkörper (37) aufweist, der begrenzt ist durch eine obere Wand (38), welche die obere Führungsrampe (21) bildet, eine hintere Wand (23) und eine Umfangswand (39), welche die Gegenflächen (45, 46) enthält und eine Öffnung (50) aufweist, durch welche der Stift zum Halten der Kondylarkugeln (8) hindurchgreift.
